# EUROPEAN PATENT SPECIFICATION

(11) **EP 0 650 327 B1**
(45) Date of publication and mention of the grant of the patent: **15.10.1997**
(21) Application number: 93916107.1
(22) Date of filing: 20.07.1993
(51) Int. Cl.: A21C 11/02

(54) **IMPROVEMENTS IN AND RELATING TO BISCUITS**
VERBESSERUNGEN IN ODER IN BEZIEHUNG ZU KEKSEN
AMELIORATIONS APPORTEES A LA PRODUCTION DE BISCUITS

(30) Priority: 21.07.1992 GB 9215493; 04.03.1993 GB 9304424
(43) Date of publication of application: 03.05.1995
(73) Proprietor: UNITED BISCUITS (UK) LIMITED, West Drayton, Middlesex UB7 6PR (GB)
(72) Inventor: EVANS, George Garfield, North Moreton, Oxon OX11 9AX (GB); SELWYN-SMITH, Jerome Selwyn, Wokingham, Berks RG11 1HW (GB); WATTS, Patricia Ann, Maidenhead, Berkshire SL6 6SX (GB)
(74) Representative: Humphreys, Ceris Anne
(86) International application number: GB9301517
(87) International publication number: WO9402023

(56) References cited:
- WO-A-86/04292

## Description

The present invention relates to biscuits and, in particular, to biscuits having apertures. The invention further relates to a method for making the biscuits.

International Patent Specification No. WO86/04292 describes a food cutter for cutting food, in particular, fruit and vegetables, into ornate configurations.

The food products with which the present invention is concerned are of the kind generally referred to as "biscuits" in the United Kingdom and are so referred to throughout the specification. It will be understood, however, that such food products may be referred to as "cookies" in some countries, including the USA.

Previously, biscuits have been formed with apertures either for purely aesthetic reasons, that is, to make the biscuits appear attractive to a person who might buy or eat them, or for the purpose of providing means for the escape of gases formed on baking. In the latter case, pins are pushed through the biscuit dough while it is being shaped into a biscuit shape. The apertures so formed tend to close up at least in part on baking. The formation of apertures to allow the escape of gases during baking is generally referred to as "dockering".

The invention provides a biscuit that has been produced by baking a short biscuit dough, the biscuit containing at least 7% by weight, and based on the total weight of the biscuit, of an edible particulate material having a particle diameter of not less than 1 mm, the biscuit having a diameter of at least 40 mm, and the biscuit being formed with at least one aperture, the area of the aperture or the total area of the apertures constituting at least 10% of the area of the biscuit (including the area of the aperture or apertures) and the size, configuration and location of the apertures being such that zones (as hereinafter defined) adjacent to the periphery of a surface of the biscuit or adjacent to the edge of the or each aperture overlap to such an extent that the total area of overlap of different zones, excluding any connected area of overlap having an area of less than 10 mm² that does not form part of a connected area of 10 mm² or more (hereinafter referred to, except in the claims, as a "connected area of overlap having an area of less than 10 mm²"), is not less than 15% of the total area of the biscuit (including the area of the aperture or apertures).

Biscuits in accordance with the invention have an attractive texture as compared with other biscuits. In particular, as a result of the specified configuration, the biscuits have areas that are of relatively soft texture, and overall a softer perceived texture, as compared with biscuits having no apertures or having apertures that do not lead to the existence of the areas of overlap of zones.

The term "diameter" is used throughout the specification including the claims, in relation to particles of particulate material, to mean the average distance separating pairs of points on the surface of the particle measured by the following method.

Particles are placed on a flat, horizontal surface and subjected to analysis by an image analyser. At 5° intervals about a vertical axis, the analyser superimposes a pair of parallel straight lines on an image of the particle at opposite sides thereof in such a manner that each touches, but does not cross, the periphery of the image of the particle, and gives the distance between the lines. Those distances are then summed and the total obtained is divided by the number of measurements. The result of that calculation gives a mean diameter of the particle. In practice, it will generally be found that if, instead of using an image analyser as described above, the diameter of the particles are measured using a microscope provided with a graticule (it being borne in mind that what is required is what can be regarded as being, or approximating to, a mean diameter), the result will be sufficiently close for practical purposes to that obtained using an image analyser.

In relation to a biscuit, "diameter" is used to mean the greatest distance separating any two points on the upper surface of the biscuit. Thus, if the biscuit is rectangular, the diameter of the biscuit will be the length of a diagonal of the upper surface, while, if the biscuit is circular, the diameter will simply be the diameter of the upper surface.

In the definition of the diameter of a biscuit, reference is made specifically to the upper surface of the biscuit merely for the sake of definiteness. Although the diameter of the biscuit defined in that way may differ from the value of the diameter that would be obtained if the lower surface were to be taken instead, any such differences will usually not be material in that context. When considering the area of an aperture, however, the difference between measurements made on the upper and lower surfaces of the biscuit may be more significant, because the differences result from edge effects and any apertures will have smaller linear dimensions than those of the biscuit, with the result that a given change in dimensions will represent a larger percentage of the dimensions in question. Where there is such a difference, the area of the or each aperture is to be the area measured on the upper surface of the biscuit.

The question of which surface of a biscuit is the upper surface and which is the lower surface will usually be immediately evident. Where, as is generally the case in the manufacture of biscuits, the dough pieces are supported on a horizontal surface during baking, the lower face will generally be the face which, during baking, was in contact with the horizontal surface and the upper surface will be the surface opposed thereto. In consequence of the flow of the dough on baking, the lower surface will generally be slightly larger in diameter than the upper surface and the mouths of the apertures will generally be larger at the upper surface than at the lower surface. Also, if, as is preferred, the dough pieces from which the biscuits are derived are made by rotary moulding, as discussed in more detail below, the apertures may be so formed that the aperture is smaller in cross-section at one face than the other in order to facilitate removal of the moulded dough piece from the rotary moulding roller. The face at which the apertures are larger in cross-section will generally be chosen to be the upper face of the biscuit. If there is any doubt as to which surface constitutes the upper surface, then, where the total aperture area is greater at one surface than the other, the upper surface is to be understood as the surface at which the total aperture area is greater.

The zones, of which one is adjacent to the periphery of a surface (the upper surface) of the biscuit and of which the or each other zone is adjacent to the edge of an aperture, are defined in the following way. A notional line drawn within, and spaced by a distance of 7 mm from, the periphery of the upper surface of the biscuit defines a zone bounded without by the said periphery and within by the notional line. Similarly, a notional line drawn around, and separated by a distance of 7 mm from, the edge of an aperture at the upper surface of the biscuit, defines a zone bounded within by the edge of the aperture and without by the notional line.

A suitable procedure for measuring areas, whether of an aperture or apertures, and of areas of overlap between zones (as hereinbefore defined) is as follows. The biscuit is first photographed from directly above and a print produced in which the biscuit is shown on an enlarged scale, a degree of enlargement within the range of from 2:1 to 3:1 being convenient.

From the photographic print, a drawing is produced by tracing, the drawing showing both the periphery of the upper surface of the biscuit and the edge of the or each aperture at that surface. To that tracing, there are then added the notional lines specified in the definition of "zone" given hereinbefore. When adding the notional lines, it is of course necessary to take account of the degree of enlargement and to increase the spacing of the notional line from the aperture edge or the edge of the biscuit accordingly.

The resulting drawing is overlaid by a transparency bearing a grid of 1 mm squares, and the required areas are assessed by the counting of squares. Where the edge of an aperture, or the boundary of a region of overlap between two zones, passes through one of the 1 mm squares, this square is counted if, and only if, the part of the square within the aperture or within the region of overlap of zones, as the case may be, is at least half the area of the square.

Lastly, the areas computed by counting squares, as described above, are converted to take account of the degree of enlargement of the biscuit as seen in the photograph.

Other suitable procedures for measuring areas of an aperture or apertures or areas of overlap are, for example, image analysis techniques, or the use of a planimeter (which is a well known mechanical device for measuring areas).

Where a planimeter is used, it is possible in many cases to mark the boundaries of the aperture(s) and the periphery of the biscuit and the lines defining the zones (both taken at the upper surface of the biscuit) on the biscuit itself (using, for example, a suitable fine-tipped pen), and to take the planimeter measurements from the biscuit so marked. It may in some cases, however, be easier to take the planimeter measurements from a photograph of the biscuit, in which case the boundaries of the aperture(s) and the periphery of the biscuit (both taken at the upper surface of the biscuit) and the lines defining the zones may be marked on the biscuit before taking the photograph, or they may be applied to the photographic print (in the case of lines defining the zones, after allowing for the degree of enlargement, if any).

It will be appreciated that, where two or more zones overlap within an aperture, the area of overlap that falls within the aperture is to be disregarded.

The biscuits of the invention are made from a short dough. In general, a dough is described as a short dough if it contains per hundred parts by weight of biscuit flour:
from 20 to 75 parts by weight sugar,
from 15 to 70 parts (usually from 25 to 70 parts) by weight fat, and
from 0 to 30 parts (usually from 5 to 25 parts) by weight added water,
assuming that the flour is a fine ground cereal grain having substantially no particles of diameter exceeding 1 mm. The term "sugar" is used throughout the specification to mean sucrose. Other sweetening materials, for example cane syrup, may be present in addition to sugar. Any suitable fat or fats may be used. "Added water" does not include water which is in the form of moisture contained in the flour, fat, sugar or any other ingredients.

Biscuit flour commonly contains 14% by weight moisture. In general, the moisture content of flours does not differ significantly from 14% by weight, so that the moisture content of the flour need not be considered in choosing the amounts of the other ingredients. Most fats commonly used have a low moisture content, not exceeding about 2% by weight based on the weight of the fat. Certain fats, however, contain significantly greater proportions of moisture. For example, if butter, which generally contains 14% by weight moisture, is used as the fat, the weight of butter required will be greater than the required weight of a typical fat would be. As a result of allowance having been made for the fact that the fat does not have a low moisture content, a short dough may have a composition lying outside the ranges stated above, although that is not usual.

The flour, sugar, fat and water are combined to form a dough, and the dough is formed into dough pieces having an aperture or apertures of the desired dimensions and at the desired locations. The dough pieces may be formed by any suitable method, for example, by using a rotary moulder or by sheeting the dough and cutting the dough pieces from the sheet.

Preferably, a rotary moulder is used to form the dough pieces. As is generally known in the art, a rotary moulder comprises a rotatable roller, the cylindrical surface of which is provided with a plurality of recessed moulds (commonly referred to as "impressions") for forming dough pieces of a desired shape and size, means for forcing the dough into the recesses, means for removing excess dough, and means for removing the dough pieces from the roller. In the manufacture of the biscuits according to the invention, the recesses are so shaped that the dough piece formed has an aperture or apertures the sizes and positions of which are such that, in the baked biscuit, the following conditions are met:
(i) The total area of the aperture or apertures at the upper face constitutes at least 10% of the area of that face of the biscuit, (including the area of the aperture or apertures).
(ii) As hereinbefore explained, zones on the upper face surrounding the aperture or apertures and adjoining the periphery of that surface of the biscuit and extending from the edges of the aperture or apertures and from the periphery of the upper surface, respectively, for a distance of 7 mm overlap with one another in such a manner that the total area of overlap, excluding any connected area of overlap having an area of less than 10 mm², is not less than 15% of the total area of the upper face of the biscuit, that is to say, the area of the upper face of the biscuit including the area of the aperture or apertures at that face.

Advantageously, the area of the aperture or the total area of the apertures constitutes from 13 to 30% of the area of the biscuit. The area of the aperture or the total area of the apertures is preferably less than 25%, for example in the range of from 13 to 20%, of the area of the biscuit, with an aperture area or total aperture area of more than 15% of the total area of the biscuit being preferred. The total area of overlap of different zones, excluding any connected area of overlap having an area of less than 10 mm², is advantageously not greater than 50%, and preferably not greater than 45% of the total area of the biscuit (including the area of the aperture or apertures). More preferably, the said area of overlap is from 16 to 37%, especially from 25 to 37% of the total area of the biscuit (including the area of the aperture or apertures).

Preferably, the biscuit is essentially circular and the aperture or apertures are so positioned that there exists at least one straight line lying in the plane of the biscuit which has to one side of it from 1/3 to 1/2 of the area of the biscuit (including the aperture or apertures), at least 95% of the area of the aperture or of the total area of the apertures ("the aperture area") of the biscuit lying to one side of the said straight line. Advantageously, all of the aperture area lies to one side of such a straight line. A biscuit according to the invention in which all, or at least 95%, of the aperture area lies within one half of the biscuit has been found to have an especially unusual and interesting texture.

The diameter of the biscuit is advantageously not less than 45 mm and, preferably, not less than 50 mm. The diameter of the biscuit is preferably not more than 73 mm.

As stated above, the biscuits according to the invention contain a particulate material, at least a substantial proportion of which has a particle diameter of not less than 1 mm. The presence of such particles distributed throughout the biscuit has the effect of changing the texture of the biscuit. Preferably, at least 85% of the particulate material in the biscuit has a particle diameter of not more than 6 mm. The references in this specification to proportions of the particulate material meeting size criteria are, of course, to be understood as references to proportions by weight, based on the total weight of the particulate material. The particulate material is selected from edible particulate materials of which, under the conditions of mixing and baking, discrete particles remain and can be discerned in the baked biscuit. Examples of such particulate materials are cereals, nuts, and coconut. Examples of nuts that may be used as the particulate material are almond, hazelnut, pecan and walnut. The nuts are preferably kibbled.

The particulate material advantageously comprises one or more cereals. The particulate material preferably comprises pieces of a flaked or kibbled cereal, for example, pieces of flaked wheat, flaked corn ("corn flakes"), flaked rye or flaked oats, or rolled oats. The cereal may be raw or at least partially cooked. Where a flaked cereal (for example, one of those mentioned above) is used as the particulate material, the cereal is at least partially cooked. The particulate material advantageously comprises pieces of corn flake. The particulate material in the biscuit may comprise two or more particulate ingredients.

It has been found that a biscuit made from a short dough comprising flour, fat, sugar, and water together with particles of corn flake and, optionally, rolled oats, has an unusual and interesting texture which is itself advantageous, and is especially advantageous when used to make biscuits with apertures in accordance with the invention.

Certain materials, for example, certain wholemeal flours, which might not alone be regarded as a particulate material because less than a substantial proportion of the particles derived from them in a cooked biscuit will have a diameter of not less than 1 mm, may, nevertheless, be used in combination with other, particulate ingredients to provide the particulate material, provided that, in the baked biscuit, a substantial proportion of the particulate material has a diameter of not less than 1 mm.

Where the particulate material is such that, during mixing and formation of dough pieces, breakage of particles of that material occurs, the particle size of the particles added to the dough must be so selected that sufficient particles of diameter not less than 1 mm will remain in the biscuit after baking. The amount of breakage will depend on the nature of the particulate material as well as the process conditions. Also, for a given particulate material, larger particles will have a greater tendency to break than smaller particles. It has been found that, where corn flake pieces are used as the particulate material, it is generally necessary to add to the other dough ingredients corn flake pieces of diameter of at least 2 to 3 mm in order to obtain a cooked biscuit in which a substantial proportion of the corn flake pieces have a particle size of 1 mm or more. The breaking down of the corn flake pieces may result in at least some particles in the cooked product having a diameter of less than 1 mm.

In the case of particulate materials of which the particles are unlikely to be broken during the processing of the mixture to produce dough pieces, the diameters of the particles incorporated in the mixture will not differ significantly from the diameters of those particles in the final biscuit. Even in the case of fragile particulate materials, for example, corn flakes, there will be no significant change in diameter of the particles once the final step, say, rotary moulding, in the mechanical operation leading to the formation of the dough pieces has been completed. That is because the nature and magnitude of any stresses that may develop during baking will not be sufficient to alter significantly the diameters of the particles. Thus, where, in the case of some particulate materials, especially when used in conjunction with certain dough recipes, it may prove difficult to remove the particles from the biscuit in order to measure their diameters, measurements should be carried out on particles removed from the dough pieces, or exposed to view, after the mechanical operations have been completed but before the pieces are baked. It will be found that that can readily be achieved by stretching the dough and perhaps also peeling off small portions of it.

The particulate material is present in an amount of 7% by weight based on the total weight of the biscuit. The proportion of particulate material in the biscuit can be calculated from the ingredients of the dough mixture. It will be appreciated that, in doing so, it will be necessary to allow for the loss of moisture from the dough piece on baking, because the percentage change in the moisture content of the particulate material will in general be different from that of the rest of the dough. For example, where corn flakes are used to provide, or to provide a proportion of, the particulate material in the baked biscuit, the loss of moisture from the corn flakes on baking will be relatively small (for example, less than 1% by weight based on the total weight of the corn flakes), as the moisture content of the corn flakes before incorporation into the dough is small (say, 3% by weight, based on the total weight of the corn flakes). The percentage loss of moisture from the remainder of the dough will, however, be much greater.

Other suitable particulate materials, for example, rolled oats or nuts, may have a moisture content that is higher than that of corn flakes so that the loss in moisture content from particles of that material on baking will be higher than in the case of corn flakes. In most cases, however, the moisture content of the particulate material to be added to the dough will be less than or equal to that of the rest of the dough (including the added water), and it will then be easier for practical purposes simply to ensure that the particulate material is added to the other ingredients of the dough in an amount of not less than 7% by weight, based on the total weight of the dough ingredients, including added water.

As is explained above, the particles of the edible particulate material that are incorporated in the dough have a particle size distribution which is such that (taking into account any breakage of particles that is expected to occur on mixing and during subsequent mechanical operations on the dough, if the particulate material is frangible) a substantial proportion of the particles of the particulate material in the baked biscuit has a diameter of 1 mm or more.

The proportion of the particles of particulate material in the biscuit having a diameter of not less than 1 mm is substantial in that the presence of the particulate material has a significant effect on the hardness of the biscuit, that is, the hardness is affected at least to such an extent that an observable effect can be demonstrated using a penetrometer. (A suitable method for determining hardness using a penetrometer is described below). The proportion of particles having a diameter of 1 mm or more may differ according to the nature of the particulate material, but will generally be not less than 25%. It will generally be advantageous for the proportion of particles of 1 mm or more in diameter to be not less than 50%, preferably not less than 75%. In an especially advantageous biscuit, at least 90% of the particles have a diameter of 1 mm or more.

In practice, the proportion of the particles of the particulate material having a diameter of not less than 1 mm will advantageously be so selected that those particles constitute at least 3.5%, and preferably at least 5%, by weight, of the total weight of the biscuit.

If desired, the biscuits may include in addition to the particulate material further inclusions that are perceived, not as altering the overall texture of the biscuit, but rather as constituting discrete portions of the biscuit having a markedly different texture from that of any part of the biscuit in which there appears not to be any such inclusion. The size of the inclusions depends upon their nature but, typically, at least a major proportion of the inclusions will have a diameter of not less than 6 mm. The inclusions, which are not cereal, may be, for example, nuts, dried fruit or chocolate chips. For materials that may be present both as inclusions and as particulate materials, for example, chopped nuts, pieces of nut having a diameter of 6 mm or more are to be regarded as inclusions and not as particles of the particulate material.

The biscuits may, if desired, be coated or partially coated with an edible material, for example, with chocolate. Also, the biscuits may be used together with a suitable filling to form sandwich biscuits.

Certain biscuits according to the invention and apparatus for making the biscuits of the invention will now be described by way of example, with reference to Figures 1 to 8, 9C, 9D, 10A, 10B and 11A to 11F of the accompanying drawings, of which:
Fig. 1 is a diagrammatic side view of a rotary moulding apparatus for forming dough pieces;
Figs. 2A, 2B, 2C, 2D and 2E are plan views of five moulds;
Fig. 3 is a diagrammatic side view of an apparatus for evaluating the texture of a portion of a biscuit;
Figs. 4A, 5A and 6A show, in diagrammatic form, biscuits without superimposed zones;
Figs. 4B, 5B and 6B are plan views of the biscuits of 4A, 5A and 6A with the zones superimposed on them;
Fig. 7A shows a plan view of a biscuit;
Fig. 7B shows the biscuit of 7A with superimposed zones;
Fig. 8A is a plan view of a biscuit showing positions for texture examination;
Fig. 8B is a graph showing the mean penetrometer measurements, with the 95 per cent least significant difference intervals for the means, for the two different halves of the biscuit of Fig. 8A;
Figs. 9A to 9F compare graphically the measured hardnesses of four biscuits examined in Methods (i) to (vi), respectively, of Example 6;

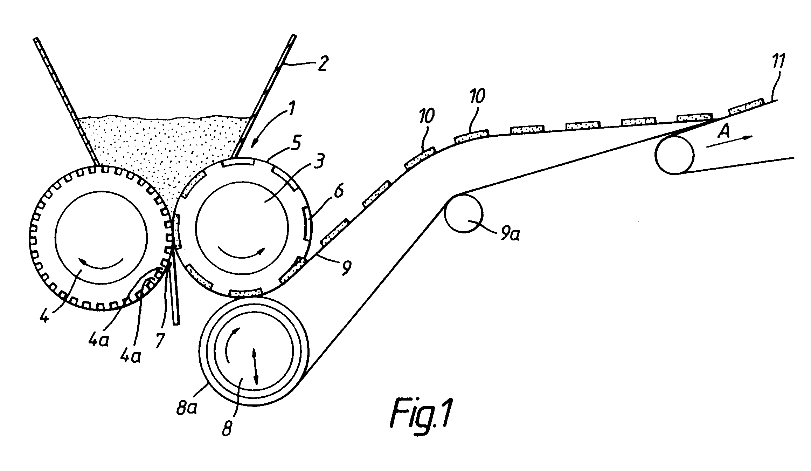

With reference to Fig. 1 of the accompanying drawings, a rotary moulding apparatus 1 for forming dough pieces has a receptacle 2, at the lower extremity of which are positioned a rotatable forming roller 3 and a rotatable counter roller (commonly referred to as a "forcing roller") 4, for forcing the dough against the forming roller 3. The surface of the counter roller 4 is provided with a plurality of ridges 4a which extend along the roller, parallel to its axis. The ridges 4a help to force the dough against the forming roller 3. The forming roller 3 has a circumferential surface 5 in which there is a plurality of impressions 6 (referred to below as "moulds"), there being provided in the moulds projections, the shapes and dimensions of which are so chosen that they form apertures of the desired shapes and dimensions in the dough pieces. The projections (which are not shown in Fig. 1) may be tapered slightly in a radially outward direction in order to facilitate removal of the formed dough pieces from the moulds. A scraping edge 7, for example, the edge of a blade, abuts the forming roller 3, the scraping edge pointing in a direction opposed to the direction of movement of the circumferential surface 5 of the forming roller 3 in the vicinity of the scraping edge, for scraping from the roller 3 any excess dough. Excess dough is returned by the counter roller 4 to the receptacle 2. An extraction web 9 for receiving dough pieces 10 is pressed against the forming roller 3 by a pressure roll 8 having a rubber covering 8a. The roller 8 is positioned underneath the forming roller 3, and downstream (with respect to the direction of movement of the dough) of the counter roller 4. The arrangement is such that the dough pieces 10 on the forming roller 3 adhere to the extraction web 9 when that is pressed against the forming roller by the pressure roll 8, so that they are removed from the moulds as rotation of the roller carries the moulds away from the web, and are transported from the rotary moulding apparatus on the web 9, via a further belt 11, in the direction of the arrow A to an oven (not shown). The web 9 is returned to the pressure roll 8 via a roller 9a, the position of which is adjustable for varying the tension of the web 9.

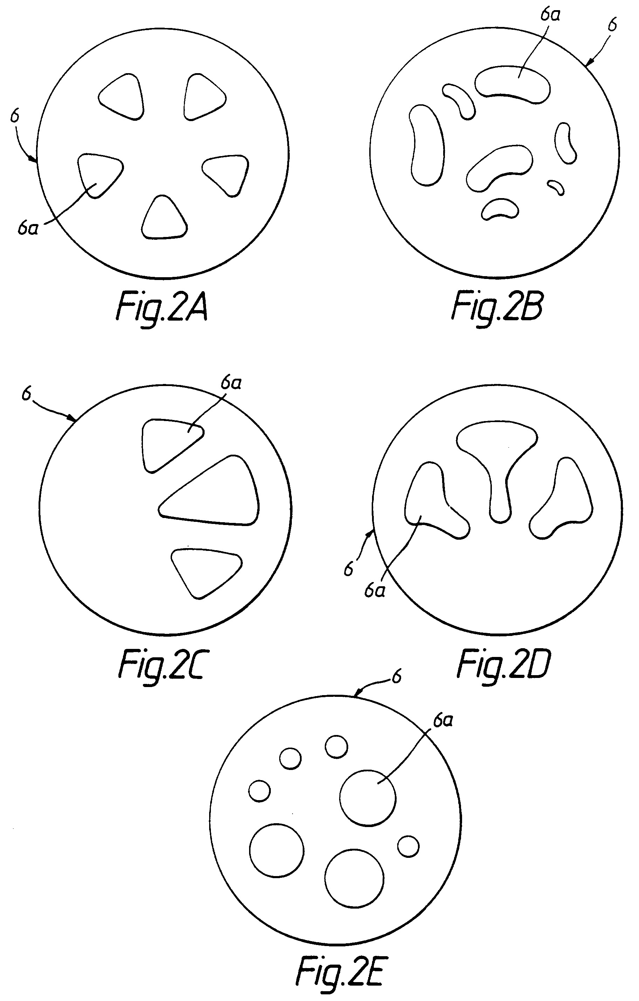

The rotatable forming roller 3 of Fig. 1 may have a multiplicity of moulds having two or more different shapes for producing dough pieces having two or more different configurations. Five mould configurations are illustrated in plan in Figs. 2A to 2E. Each mould has a plurality of projections 6a. Although, as indicated above, the projections are slightly tapered, because the angle of taper is small, it cannot be shown in Figs. 2A to 2E.

Whilst each of the moulds 6 shown in Figs. 2A to 2E is such that the resulting biscuits have apertures formed by virtue of corresponding protrusions 6a in the moulds, that are so dimensioned and positioned that the biscuit has the soft texture that is obtainable in accordance with the invention, the particular arrangements shown are also selected having regard to aesthetic considerations. The biscuits produced each have a diameter of approximately 63 mm, the diameter of their lower face being approximately 65 mm.

Each of the biscuits made using the moulds of Figs. 2A to 2E may be demonstrated to have zones (as defined hereinbefore) that overlap as explained above. The total area of the apertures and the total area of overlap of different zones excluding any connected area of overlap having an area of less than 10 mm² may be measured by any suitable method, for example, any of the methods stated hereinbefore to be suitable.

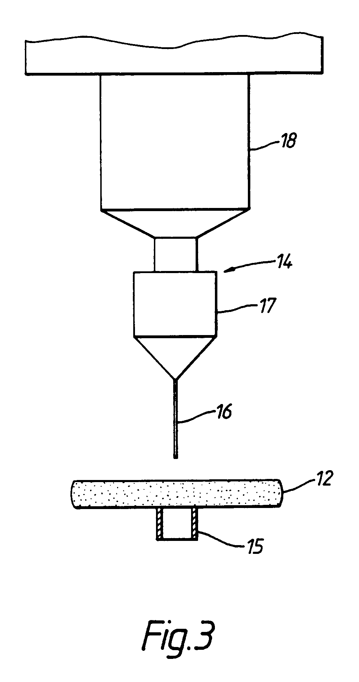

The texture of the biscuits may be measured at given points by using suitable apparatus (see Fig. 3), which comprises a penetrometer 14 and an annular support 15 of outer diameter 18 mm and inner diameter 16 mm, which is provided for supporting the biscuit. The penetrometer 14 has a cylindrical probe 16 having a diameter of 1.5 mm. The end of the probe 16 has a flat circular surface. The penetrometer, which may be, for example, an Instron 1140 Texture Analyser, is capable of advancing the probe towards the support 15 at a constant speed.

The probe 16 is mounted in a chuck 17 which is connected to a load cell 18, arranged to generate an electrical output. The magnitude of that output varies according to the force experienced by the probe. The speed of advance of the probe is maintained constant by the system. The load cell is connected to a chart recorder (not shown) for monitoring the electrical output from the load cell. It is convenient to regard the maximum signal height in mm recorded by the chart recorder as the measure of the peak force.

In use, a biscuit 12 is placed on the support 15, the biscuit being so positioned that the point at which the texture of the biscuit is to be ascertained is at the centre of the support 15. Where the point to be examined lies near the edge of the biscuit, a further support may need to be provided to ensure stability of the biscuit. The probe 16 is advanced at a velocity of 50 mm/min. along the axis of the probe, until its tip has pierced both the upper and lower surfaces of the biscuit. The maximum force measured during the advance of the probe is then read from the chart recorder as explained above.

The following Examples illustrate the invention.

### Example 1

A short dough was prepared using the following ingredients:

| Ingredient | Amount (% by weight) |
|---|---|
| Butter | 6.82 |
| PHS* | 10.49 |
| Sugar | 15.75 |
| Cane syrup | 4.19 |
| Biscuit flour | 29.00 |
| Water | 2.00 |
| Salt | 0.16 |
| Sodium bicarbonate | 0.42 |
| Ammonium bicarbonate | 0.21 |
| Whey powder | 3.15 |
| Modified starch (maltodextrin) | 1.57 |
| Corn flakes | 7.87 |
| Rolled Oats | 18.37 |

| | |
|---|---|
| * PHS is a blend of 15% hydrogenated soya bean oil and 85% non-fractionated palm oil. | |

The particles of corn flake were from 4 to 22 mm in diameter, with a mean diameter (see below) of 12 mm, and the particles of oats were from 2 to 7.5 mm in diameter, with a mean diameter (see below) of 5 mm. In relation to the particles of corn flakes and oats, the "mean diameter" was determined by classifying the measured diameters according to size (the measured diameters being classified in accordance with which of a number of contiguous intervals they fell within, the sizes of the intervals being approximately 1 mm for corn flakes and 0.5 mm for oats) and selecting the interval with the highest population.

To form the dough, the ammonium bicarbonate was dissolved in water, the solution added to the fat, sucrose, cane syrup, salt and sodium bicarbonate, and the combined ingredients mixed for 3 minutes in a Vicars No. I high speed mixer having a "Z" blade configuration at a mixing speed of 60 rpm. The remaining ingredients were added, and mixing was continued for 2.5 minutes at a mixer speed of 30 rpm. At the end of that period, the dough temperature was 24°C.

The dough was placed in the receptacle 2 of the rotary moulding apparatus of Fig. 1. The forming roller 3 had a radius of 12.75 cm and was rotated at a speed of two r.p.m. The counter roller 4 had a radius of 11.1 cm and had 46 longitudinal ridges 4a of height five mm, (measured in the radial direction), and of width eight mm spaced uniformly about the roller circumference. The counter roller 4 was rotated at a speed of three r.p.m. The forming roller 3 had circular recessed moulds of diameter 63 mm, there being at least one mould configured in accordance with each of Figs. 2A to 2E.

Formed dough pieces were transported by the extraction web 9 to the conveyor belt 11, which transported them to an oven. The dough pieces had a diameter of 63 mm and an average weight of 11.7 g, the actual weight of the individual pieces being dependent upon the total size of the apertures in the configuration concerned. The dough pieces were transported to a forced convection travelling baking oven having three sections. The dough pieces were passed in sequence through the first, second and third sections of the oven, which were maintained, respectively, at temperatures of 170°C, 185°C and 175°C. During baking, steam was injected into the baking chamber to maintain humidity. The total baking time was 5.25 minutes.

After cooling, the biscuits were found to have a diameter of 63 mm, the diameter of the lower face being 65 mm. The total area of overlap of two zones (as explained hereinbefore) and the total aperture area were measured by image analysis and the proportion of the upper face constituted by apertures and the proportion of the upper face constituted by overlap of two zones (excluding any connected area of overlap having an area of less than 10 mm²) was calculated. The results of the measurements are given in Table I.

**Table I**

| Biscuits | Aperture area (% based on total area of upper face) | Overlap area (% based on total area of upper face) |
|---|---|---|
| 2A | 21 | 34 |
| 2B | 20 | 45 |
| 2C | 18 | 28 |
| 2D | 21 | 33 |
| 2E | 19 | 37 |

The biscuits were considered to have an attractive appearance and texture.

The rotary moulding apparatus used in this Example was a pilot plant apparatus. The method described may also be carried out using a larger rotary moulding apparatus that is suitable for use in a production plant.

### Example 2

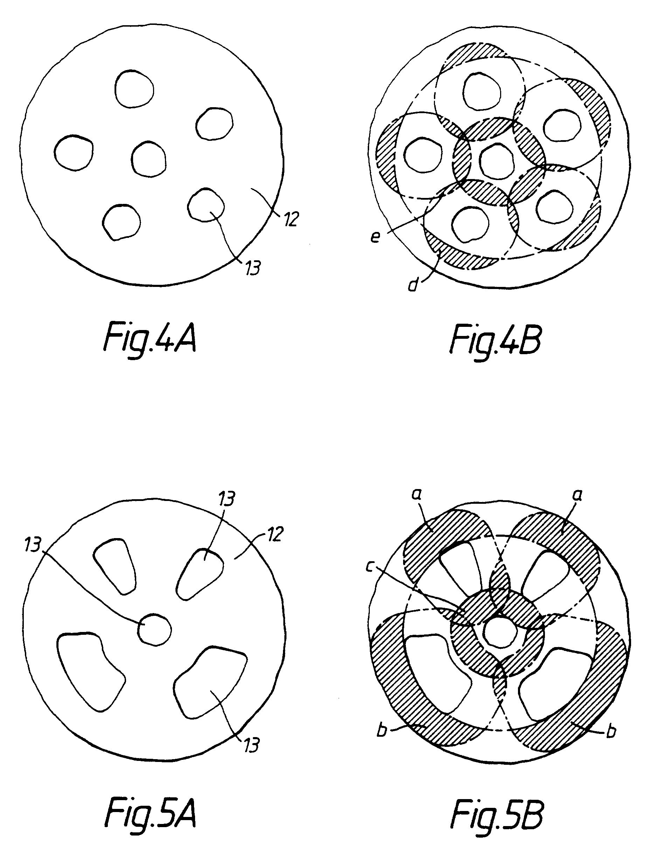

Figs. 4A and 4B show, in diagrammatic form and not to scale, a biscuit 12 without superimposed zones (Fig. 4A) and, in Fig. 4B, the same biscuit with zones (as hereinbefore defined) shown by a broken line positioned within, and spaced by a distance of 7 mm from, the periphery of the biscuit and a further broken line associated with each aperture 13, the said further broken line being in each case drawn around, and separated by a distance of 7 mm from, the edge of the respective aperture. The areas of overlap of two or more of the zones so defined are indicated by cross-hatching. With reference to Fig. 4B, the areas of overlap d and e are measured by image analysis as being 131 mm² and 415 mm², respectively. There are four further areas of overlap having the same area as the area d, giving a total area of overlap of 1070 mm². Using image analysis, the total area of the biscuit is found to be 3048 mm² and the area of apertures is found to be 617 mm². Thus, the area of apertures is 20% of the area of the biscuit and the total area of overlap is 35% of the area of the biscuit.

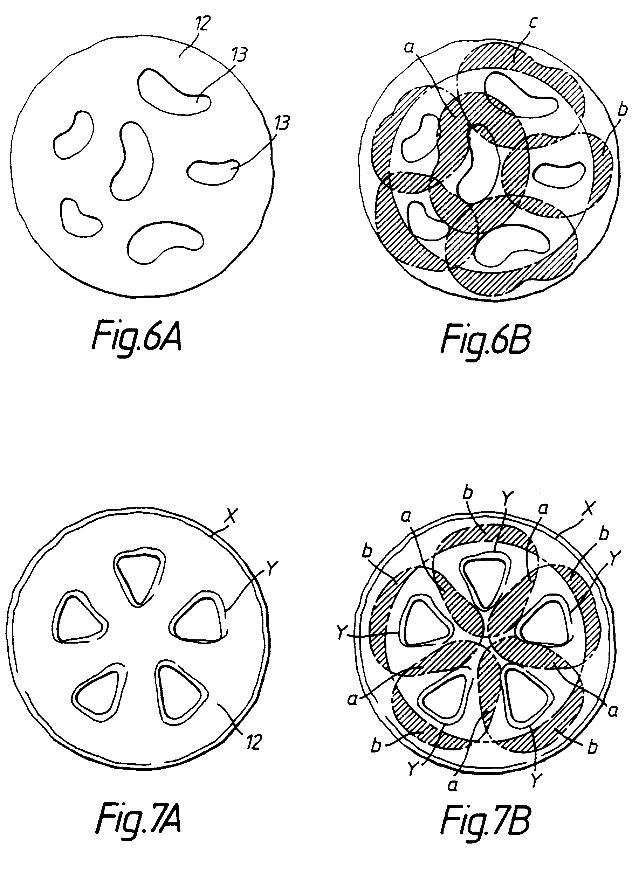

Figs. 5A and 5B and Figs. 6A and 6B show, in diagrammatic form and not to scale, two other biscuits 12, which in each case are shown both without the zones (Figs. 5A and 6A) and with the zones defined by broken lines (Figs. 5B and 6B), the areas of overlap of two or more zones being indicated in the latter case by cross-hatching.

In the biscuit of Figs. 5A and 5B, the magnitudes of the areas of overlap a to c (see Fig. 5B) as determined by image analysis are as follows: a: 128 mm², b: 214 mm², c: 357 mm². Thus, allowing for the fact that there are two areas of overlap a and two areas of overlap b, the total area of overlap is 1041 mm². Using image analysis, the total area of the biscuit is found to be 2939 mm² and the total area of the apertures 13 is found to be 605 mm². Thus, the area of apertures is 21% of the area of the biscuit and the total area of overlap is 35% of the area of the biscuit.

In the biscuit of Figs. 6A and 6B, the magnitudes of areas of overlap a to c are found by image analysis to be as follows: a: 946 mm², b: 69 mm² and c: 143 mm². Those parts of the area of overlap a lying within apertures were disregarded, when making the measurement. Using image analysis, the total area of the biscuit is 3057 mm², and the total area of the apertures is 556 mm², that is, 18% of the area of the biscuit. The total area of overlap is 1158 mm², that is, 38% of the area of the biscuit.

### Example 3

Fig. 7A shows in plan view and not to scale a further biscuit 12, which was made in accordance with the method of Example 1 using an appropriately shaped mould 6. In the biscuit of Fig. 7A, as will often be the case in the biscuits according to the invention, the mouths of the apertures at the upper surface of the biscuit were larger in cross-section than the mouths at the lower surface. In Fig. 7B, an unbroken line X indicates the perimeter of the upper surface of the biscuit, and an unbroken line Y around each of the apertures indicates the perimeter of the mouth of the aperture at the upper surface. As the zones are to be defined with reference to the upper surface of the biscuit, they are defined by a notional line drawn within, and spaced by a distance of 7 mm from, the perimeter of the upper surface of the biscuit (that is, from the line X) and by respective further notional lines drawn around, and separated by a distance of 7 mm from, the perimeter of the mouth of each aperture at the upper surface of the biscuit (that is, from the line Y). The said notional lines are indicated in Fig. 7B by broken lines, and the areas of overlap of two or more of the zones so defined are indicated by cross-hatching. The upper surface of the biscuit had a diameter of approximately 63 mm. The area of the upper surface of the biscuit, the area of each aperture at the upper surface of the biscuit and the area of each area of overlap of two or more zones were measured, by using a planimeter, on a photographic print that showed the biscuit enlarged to three times its actual size. The planimeter used was a zero-setting compensating polar planimeter made by W. F. Stanley & Co. Ltd..

The area of the upper surface of the biscuit on the print was 279 cm². The total area of the apertures 13 was 53 cm². The areas of the five zones of overlap designated by the letter a were 7.8 cm², 8.4 cm², 7.4 cm², 7.4 cm² and 7.0 cm², respectively. The areas of the five zones of overlap designated by the letter b were 7.3 cm², 8.8 cm², 7.8 cm², 8.3 cm² and 8.1 cm², respectively. Accordingly, the total area of overlap was 78.3 cm². Thus, for the biscuit of Figs. 7A and 7B, the total area of the apertures is 19% of the total area of the upper surface, and the total area of overlap is 28% of the total area of the upper surface.

It will be appreciated that, because the measurements were made from a photographic print showing the biscuit enlarged by three times, the actual areas of the apertures, the zones of overlap and the upper surface of the biscuit will be one ninth of those given above.

In this Example the lines X and Y were marked onto the biscuit before producing the enlarged photographic print and the broken lines defining the zones were added to the enlarged print (the broken lines being spaced by 21 mm from the lines X and Y in view of the degree of enlargement). It would also be possible, however, to mark all the lines on to the biscuit, or to add all the lines to the enlarged print.

### Example 4

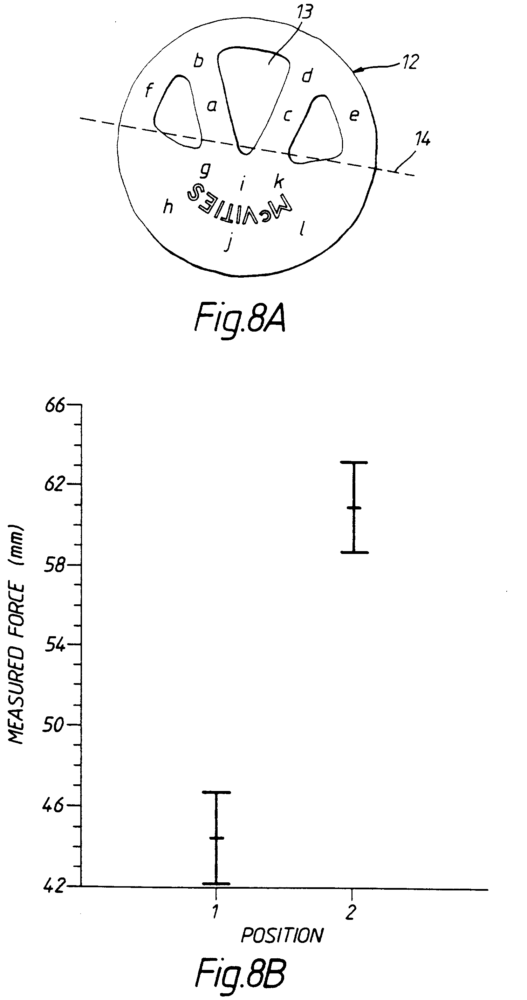

Eleven biscuits were prepared as described in Example 1 using moulds of the configuration shown in Fig. 2C, and their texture was examined using the apparatus of Fig. 3. Fig. 8A is a diagrammatic plan view of a biscuit 12 showing by means of the letters a to l twelve points at which the maximum resistance to penetration of the probe (as explained above) was measured for each biscuit. It was found convenient to compare the measurements in mm taken from the chart recorder (each of which measurements was proportional to the maximum force measured) with a signal height of 1 mm corresponding to 13 grammes force, rather than to convert to the actual maximum forces.

As will be apparent from Fig. 8A, the arrangement of the apertures was such that substantially all of the aperture area fell within one half of the biscuit. The broken line 14 represents a diameter of the biscuit. Points a to f were located in the half of the biscuit comprising substantially all of the aperture area and points g to l were located in the other half of the biscuit.

The penetrometer measurements expressed in mm as explained above made for the points a to f, each of which was located within an area of overlap of two zones, were summed and their mean was calculated. Similarly, the measurements made for the points g to l, none of which was located within an area of overlap of two zones, were summed and their mean was determined. Fig. 8B shows the results of the penetrometry examination in graphical form. At "Position 1" is indicated by a point the mean value of measurements obtained at points a to f, for which a mean value of 44.5mm ± 3.2 (95% confidence limit) was calculated. At "Position 2" is indicated by a point the mean value of measurements made at points g to l, for which a mean reading of 61 mm ± 3.2 (95% confidence limit) was calculated. The bars extending vertically from each of the mean values at Positions 1 and 2 define the 95% least significant difference intervals of the mean.

The penetrometry measurements demonstrate a significant difference in texture between points located in overlapping zones between two apertures or between an aperture and an edge and points that are relatively distant from an aperture or edge or are close to only one aperture or only to the edge, and are thus not in overlapping zones. It has been found that such a difference in texture between two halves of a biscuit results in a very unusual perceived texture.

### Example 5

Biscuits of four configurations were made being, respectively, the configurations shown in Figs. 2B, 4A, 5A, and 7A. The texture of the biscuits was examined using a penetrometer in the manner described in Example 4. In each case, the texture was examined at a point which fell within an area of overlap of two or more zones (as defined herein). To provide a basis for comparison, the texture of a biscuit made from the same dough, and with the same cooking conditions, but having no apertures, was also examined at a point more than 7 mm from the periphery. The maximum height on the chart recorder of the penetrometer was measured in mm. Each reading was repeated a number of times and the mean recorder reading at the maximum force in the tests for each biscuit were calculated by taking the sum of the maximum readings for that biscuit and dividing by the number of readings. The mean recorder readings at the maximum force for biscuits 2B, 4A, 5A and 7A were 75 mm, 81 mm, 81 mm and 80 mm, respectively, and the mean recorder reading at the maximum force for the comparison biscuit was 114 mm. Thus, the texture of the areas of overlapping zones in the biscuits of the invention is significantly softer than that of a biscuit having no apertures.

### Example 6

In each of Methods (i) to (vi) below, biscuits were made by the method described in Example 1 except that the 7.87% by weight corn flakes and 18.37% by weight rolled oats used in the dough of Example 1 were in each of Methods (i) to (vi) replaced by the ingredient(s) specified. Where the particle size distribution of the particulate ingredients before incorporation into the dough is specified, that was determined using a series of sieves, each of which conformed to British Standard No. 410. The sieves were arranged in a column in order of their mesh size, with the coarsest mesh being uppermost. The particulate material was placed in the uppermost sieve, the column was shaken using a rotary shaker for ten minutes, and the material then retained in each sieve was weighed.

Dough pieces were formed using a rotary moulder as described above with reference to Figure 1.

The diameter of particles in the dough pieces was ascertained as follows. A number of the dough pieces were broken and/or stretched to reveal the particles, which were then removed from the surrounding dough using a suitable instrument (for example, a scalpel). The particles were placed, spaced from one another, on a surface of contrasting colour under the TV camera and macrolens of a Seescan Image Analyser. The camera was positioned to give a suitable magnification of the particles (a magnification of approximately x 5 was generally found to be appropriate), the Analyser being calibrated by examining a graticule placed under the camera and adjusting the Analyser accordingly. The mean values of the diameter given in Methods (i) to (vi) were calculated from the diameters of at least fifty particles, not including any particles of diameter less than 1 mm.

The remaining dough pieces were baked to give the biscuits. In each case, biscuits were made having the configuration of each of Figures 5A, 6A and 7A and, for the purposes of comparison, biscuits having no apertures were made.

The hardness of the biscuits was examined using a penetrometer, as described above in relation to Figure 3. For each biscuit configuration of each of Methods (i) to (vi), ten biscuits were examined, penetrometer readings being taken at a number of positions on each biscuit, the maximum displacement of the chart recorder in mm (which, as explained earlier, corresponds to the maximum force applied) being measured at each position. In the case of each of the biscuits without apertures, measurements were made at eleven positions spaced from one another and being not less than 7mm from the perimeter of the upper surface of the biscuit. On each of the biscuits of configuration according to one of Figures 5A, 6A and 7A, measurements were made at ten positions spaced from one another and each lying in an area of overlap of two zones. From the set of readings thus obtained in respect of each biscuit configuration in each of Methods (i) to (vi), (that is, the set of 110 readings, where the biscuit had no apertures, or the set of 100 readings for each of the biscuits of Figs. 5A, 6A and 7A) the mean was calculated.

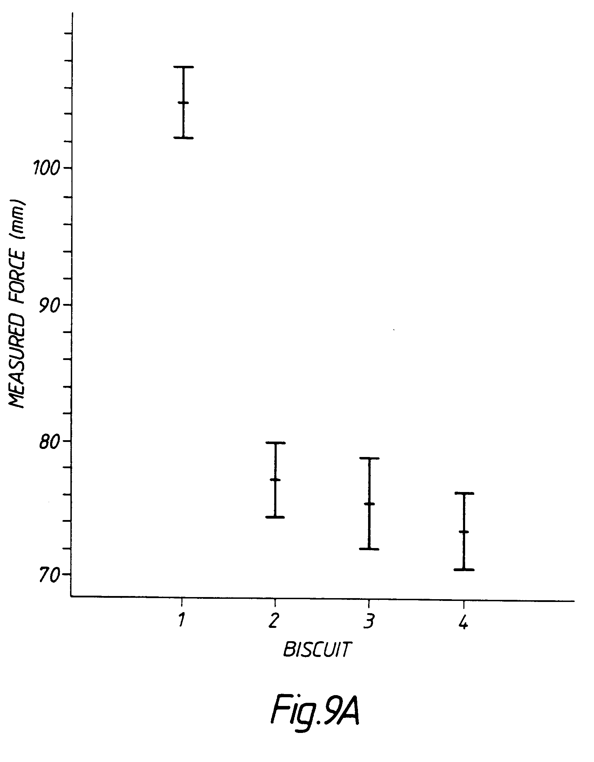

The results are plotted in Figures 9a to 9f, in which biscuit 1 refers to biscuits having no apertures, biscuit 2 refers to biscuits having the configuration shown in Fig. 5A, biscuit 3 refers to biscuits having the configuration shown in Fig. 6A, and biscuit 4 refers to biscuits having the configuration shown in Fig. 7A. For each biscuit configuration in each of those Figures, the mean of the measured readings is indicated by a point, and the bars extending vertically from the point define the least significant difference intervals of the mean.

### Method (i)

Particulate material: corn flakes (26.24% by weight based on all the ingredients including water).
Particle size distribution of corn flakes before mixing:

| | | | | | | |
|---|---|---|---|---|---|---|
| Sieve size (mm): | 5.6 | 4.00 | 2.00 | 1.00 | 0.5 | <0.5 |
| % material retained: | 50.6 | 25.2 | 22.6 | 1.4 | 0.1 | 0.2 |

Mean particle diameter in dough pieces: 4.0mm

The results of the hardness measurements are shown in Figure 9a.

### Method (ii)

Particulate material: rolled oats (26.24% by weight based on all the ingredients including water).
Particle size distribution of rolled oats before mixing:

| | | | | | | |
|---|---|---|---|---|---|---|
| Sieve size (mm): | 4.00 | 2.80 | 1.18 | 0.6 | 0.425 | <0.425 |
| % material retained: | 3.8 | 27.0 | 49.7 | 10.3 | 2.5 | 6.7 |

Mean particle diameter in dough pieces: 3.4mm

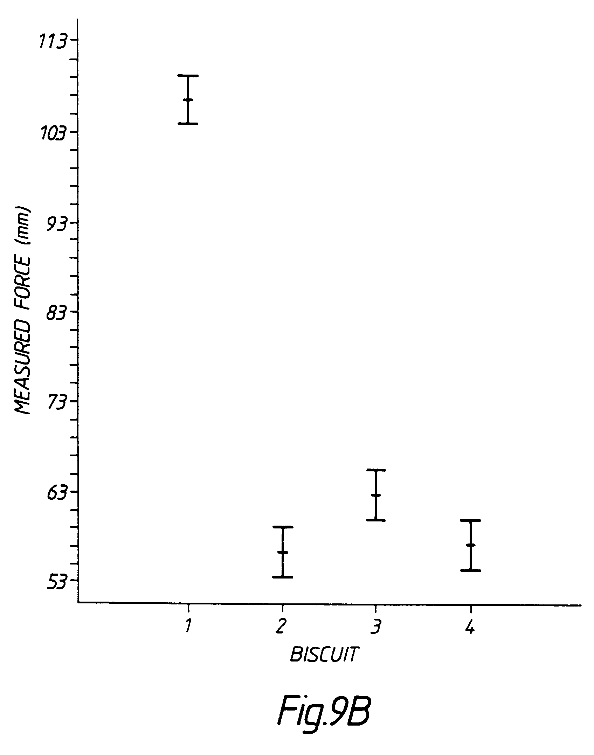

The results of the hardness measurements are shown in Figure 9b.

### Method (iii)

Particulate material: bran flakes and rolled oats (7.87% and 18.37% by weight, respectively, based on all the ingredients including water).

The particle size distribution of the rolled oats before mixing is given in Method (ii).
Mean particle diameter in dough pieces:
   4.4mm (bran flakes)
   3.4mm (rolled oats)

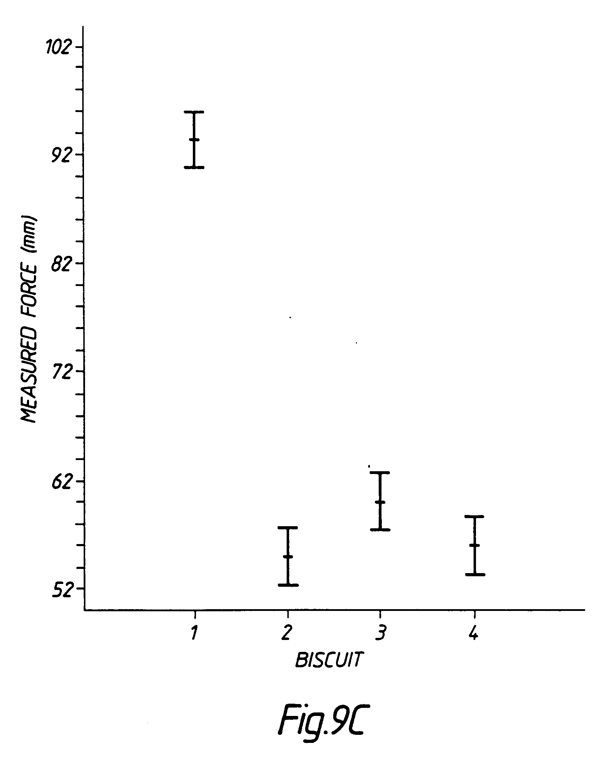

The results of the hardness measurements are shown in Figure 9c.

### Method (iv)

Particulate material: chopped nuts (26.24% by weight based on all the ingredients including water).
Particle size distribution of chopped nuts before mixing:

| | | | | | | | | |
|---|---|---|---|---|---|---|---|---|
| Sieve size (mm): | 4.00 | 3.35 | 2.80 | 2.36 | 2.00 | 1.70 | 1.40 | >1.40 |
| % material retained: | 2.3 | 31.3 | 33.7 | 20.6 | 6.5 | 3.2 | 1.3 | 0.9 |

Mean particle diameter in dough pieces: 4.1mm

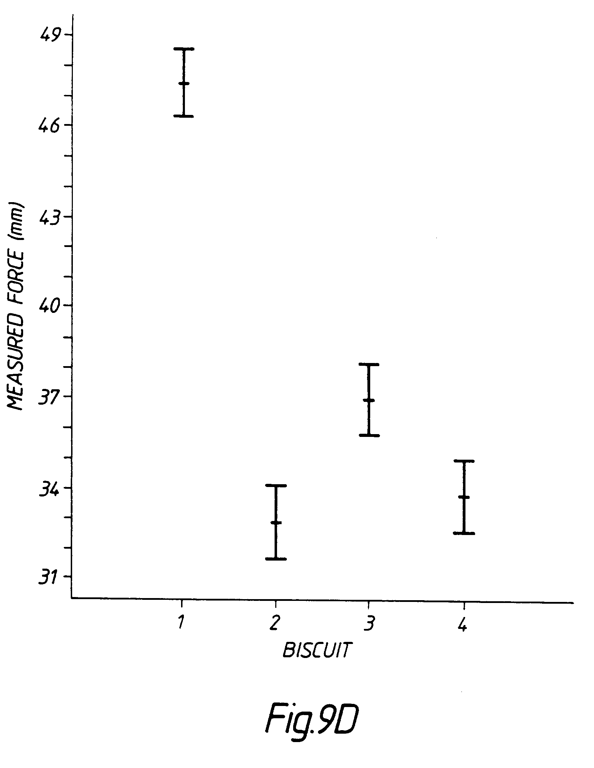

The results of the hardness measurements are shown in Figure 9d.

### Method (v)

Particulate material: rolled oats (18.37% by weight, based on all the ingredients including water).
Additional ingredient: currants (7.87% by weight, based on all ingredients including water).

The particle size distribution of the rolled oats before mixing is given in Method (ii).
Mean diameter of rolled oats particles in dough pieces:
   3.4mm
Mean diameter of currants in dough pieces: 7.0mm

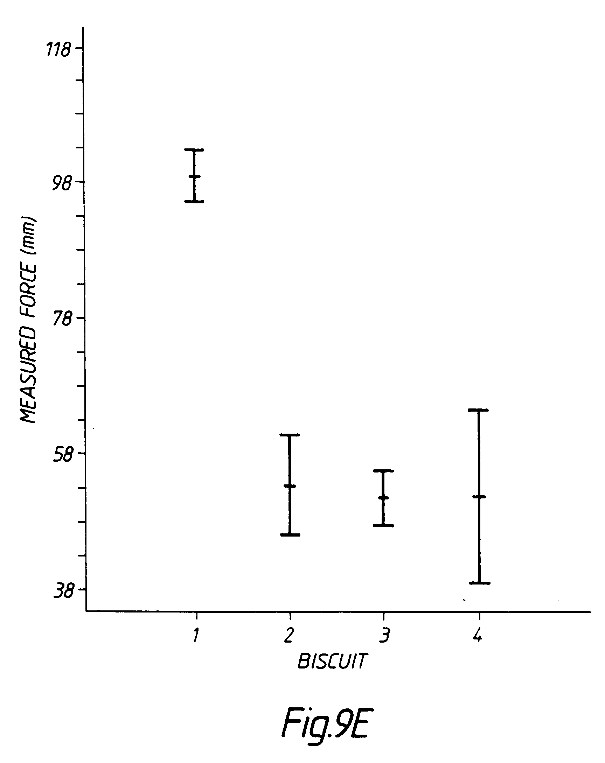

The results of the hardness measurements are shown in Figure 9e.

### Method (vi)

Particulate material: crisped rice and rolled oats (7.87% and 18.37% by weight, respectively, based on all the ingredients including water).
Particle size distribution of crisped rice before mixing:

| | | | | | | | | |
|---|---|---|---|---|---|---|---|---|
| Sieve size (mm): | 3.35 | 2.8 | 2.36 | 2.00 | 1.70 | 1.40 | 1.18 | >1.18 |
| % material retained: | 1.6 | 21.1 | 58.2 | 16.8 | 2.2 | 0.1 | 0.02 | 0.01 |

The particle size distribution of the rolled oats before mixing is given in Method (ii).
Mean particle size in dough pieces: 3.3mm (crisped rice)
   3.4mm (rolled oats)

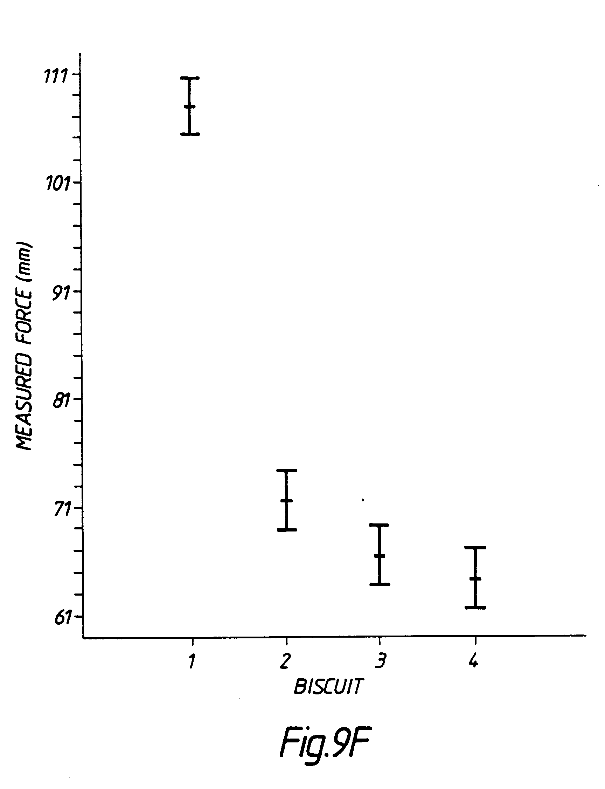

The results of the hardness measurements are shown in Figure 9f.

As may be seen from Figures 9a to 9f, the hardness is in each case considerably less in biscuits having apertures giving rise to overlapping zones as described above than in biscuits where there are no apertures.

From a comparison of the mean of the peak penetrometer readings in respect of different particulate materials it may be seen that the hardness is dependent on the nature of the particulate material. It has been found that the use of cereals (especially rolled oats, corn flakes and crisped rice) in combination with the specified aperture configuration gives a particularly interesting texture.

## Claims

1. A biscuit that has been produced by baking a short biscuit dough, the biscuit containing at least 7% by weight, and based on the total weight of the biscuit, of an edible particulate material, which particulate material was incorporated with the dough before baking, at least a substantial proportion of the particulate material having a particle diameter of not less than 1 mm, the biscuit having a diameter of at least 40 mm, and the biscuit being formed with at least one aperture, the area of the aperture or the total area of the apertures constituting at least 10% of the area of the biscuit (including the area of the aperture or apertures), and the size, configuration and location of the apertures being such that zones adjacent to the periphery of a surface of the biscuit or adjacent to the edge of the or each aperture and defined by a notional line drawn, respectively, within, and spaced by a distance of 7 mm from, the periphery and a notional line drawn around, and separated by 7mm from, the edge of the or each aperture overlap to such an extent that the total area of overlap of different zones, excluding any connected area of overlap having an area less than 10 mm² that does not form part of a connected area of 10 mm² or more, is not less than 15% of the total area of the biscuit (including the area of the aperture or apertures).

2. A biscuit as claimed in claim 1, wherein the area of the aperture or the total area of the apertures constitutes from 13 to 30% of the area of the biscuit.

3. A biscuit as claimed in claim 1 or claim 2, wherein the total area of overlap of different zones, excluding any connected area of overlap having an area less than 10 mm² that does not form part of a connected area of 10 mm² or more, is not greater than 50% of the total area of the biscuit (including the area of the aperture or apertures).

4. A biscuit as claimed in any one of claims 1 to 3, wherein the total area of overlap of different zones, excluding any connected area of overlap having an area less than 10 mm² that does not form part of a connected area of 10 mm² or more, is from 16 to 37% of the total area of the biscuit (including the area of the aperture or apertures).

5. A biscuit as claimed in any one of claims 1 to 4, wherein the biscuit is essentially circular and the aperture or apertures are so positioned that there exists at least one straight line lying in the plane of the biscuit which has to one side of it from 1/3 to 1/2 of the area of the biscuit, at least 95% of the aperture area of the biscuit lying to one side of the said straight line.

6. A biscuit as claimed in claim 5, wherein all of the aperture area lies to one side of the said straight line.

7. A biscuit as claimed in any one of claims 1 to 6, wherein the particulate material is a cereal.

8. A biscuit as claimed in claim 7, wherein the particulate material comprises a flaked or kibbled cereal.

9. A biscuit as claimed in claim 7, wherein the particulate material comprises corn flakes.

10. A biscuit as claimed in claim 8, wherein the particulate material consists of corn flakes and rolled oats.

11. A biscuit as claimed in any of claims 1 to 10, which has a diameter of at least 50 mm.

12. A method of making a biscuit, comprising the steps of:
(i)
combining 100 parts by weight of biscuit flour,
20 to 75 parts by weight sugar,
15 to 70 parts by weight fat,
0 to 30 parts by weight water, and
10 to 25 parts by weight of a particulate material to obtain a dough mixture,
(ii) forming the dough mixture into a dough piece having at least one aperture, and
(iii) baking the dough piece,
the particle size of the particulate material used in step (i) being such that the cooked biscuit contains particles of the particulate material, a substantial proportion of which are of diameter not less than 1 mm, and the dimensions and configurations of the dough piece and the aperture or apertures formed in step (ii) being such that, in the baked biscuit, the area of the aperture or the total area of the apertures constitutes at least 10% of the area of the biscuit (including the area of the aperture or apertures), and the size, configuration and location of the apertures is such that zones adjacent to the periphery of a surface of the biscuit or adjacent to the edge of the or each aperture and defined by a notional line drawn, respectively, within, and spaced by a distance of 7 mm from, the periphery and a notional line drawn around, and separated by 7mm from, the edge of the or each aperture overlap to such an extent that the total area of overlap of different zones, excluding any connected area of overlap having an area less than 10 mm² that does not form part of a connected area of 10 mm² or more, is not less than 15% of the total area of the biscuit (including the area of the aperture or apertures).

13. A method as claimed in claim 12, wherein the particulate material is a cereal product derived from wheat, corn, rye or oats.

## Patentansprüche

1. Ein Gebäckstück, das durch Backen eines Mürbeteiges hergestellt worden ist, wobei das Gebäckteil mindestens 7 Gew.-%, und basierend auf dem Gesamtgewicht des Gebäckteils, eines eßbaren stückigen Materials enthält, welches stückige Material vor dem Backen in den Teig eingebracht worden war, wobei zumindest ein wesentlicher Anteil des stückigen Materials einen Partikeldurchmesser von nicht weniger als 1 mm hat, das Gebäckteil einen Durchmesser von mindestens 40 mm hat und das Gebäckteil mit mindestens einer Durchbrechung geformt worden ist, wobei die Fläche der Durchbrechung oder die Gesamtfläche der Durchbrechungen mindestens 10% der Fläche des Gebäckstücks (einschließlich der Fläche der Durchbrechung oder Durchbrechungen) ausmacht, und die Größe, Konfiguration und Position der Durchbrechungen derart ist, daß Zonen nahe der Peripherie einer Oberfläche des Gebäckstücks oder nahe dem Rand der oder jeder Durchbrechung und definiert durch eine gedachte Linie, gezogen innerhalb und im Abstand um eine Distanz von 7 mm von der Peripherie, bzw. einer gedachten Linie, gezogen rings um und getrennt durch 7 mm Abstand von dem Rand der oder jeder Durchbrechung, in einem solchen Ausmaß überlappen, daß die Gesamtfläche der Überlappung unterschiedlicher Zonen, ausgenommen irgendwelcher verbundener Überlappungsfläche, mit einer Fläche, die kleiner ist als 10 mm², welche keinen Teil einer verbundenen Fläche von 10 mm² oder mehr bildet, nicht kleiner ist als 15% der Gesamtfläche des Gebäckstücks (einschließlich der Fläche der Durchbrechung oder Durchbrechungen).

2. Ein Gebäckstück nach Anspruch 1, bei dem die Fläche der Durchbrechung oder die Gesamtfläche der Durchbrechungen 13 bis 30% der Fläche des Gebäckstücks bildet.

3. Ein Gebäckstück nach Anspruch 1 oder Anspruch 2, bei dem die Gesamtfläche der Überlappung verschiedener Zonen, ausgenommen irgendwelcher verbundener Überlappungsfläche, mit einer Fläche, die kleiner ist als 10 mm², welche keinen Teil einer verbundenen Fläche von 10 mm² oder mehr bildet, nicht größer ist als 50% der Gesamtfläche des Gebäckstücks (einschließlich der Fläche der Durchbrechung oder Durchbrechungen).

4. Ein Gebäckstück nach einem der Ansprüche 1 bis 3, bei dem die Gesamtüberlappungsfläche verschiedener Zonen, ausgenommen irgendwelcher verbundener Überlappungsfläche, mit einer Fläche kleiner als 10 mm², die keinen Teil einer verbundenen Fläche von 10 mm² oder mehr bildet, zwischen 16 und 37% der Gesamtfläche des Gebäckstücks (einschließlich der Fläche der Durchbrechung oder Durchbrechungen) ausmacht.

5. Ein Gebäckstück nach einem der Ansprüche 1 bis 4, bei dem das Gebäckstück im wesentlichen kreisrund ist und die Durchbrechung oder Durchbrechungen so positioniert sind, daß mindestens eine gerade Linie existiert, die in der Ebene des Gebäckstücks liegt, welche auf einer Seite von sich 1/3 bis 1/2 der Fläche des Gebäckstücks hat, wobei zumindest 95% der Durchbrechungsfläche des Gebäckstücks auf einer Seite der genannten geraden Linie liegt.

6. Ein Gebäckstück nach Anspruch 5, bei dem die gesamte Durchbrechungsfläche auf einer Seite der geraden Linie liegt.

7. Ein Gebäckstuck nach einem der Ansprüche 1 bis 6, bei dem das stückige Material ein Getreide ist.

8. Ein Gebäckstück nach Anspruch 7, bei dem das stückige Material Getreideflocken oder Getreideschrot umfaßt.

9. Ein Gebäckstück nach Anspruch 7, bei dem das stückige Material Cornflakes umfaßt.

10. Ein Gebäckstück nach Anspruch 8, bei dem das stückige Material aus Cornflakes und Haferröllchen besteht.

11. Ein Gebäckstück nach einem der Ansprüche 1 bis 10 mit einem Durchmesser von mindestens 50 mm.

12. Ein Verfahren zum Herstellen eines Gebäckstücks, umfassend die Schritte:
(i)
Kombinieren von 100 Gewichtsteilen Backmehl,
20 bis 75 Gewichtsteilen Zucker,
15 bis 70 Gewichtsteilen Fett,
0 bis 30 Gewichtsteilen Wasser, und
10 bis 25 Gewichtsteilen stückigen Materials, um ein Teiggemisch zu erhalten,
(ii) Formen des Teiggemischs in ein Teigstück mit mindestens einer Durchbrechung, und
(iii) Backen des Teigstücks, wobei die Partikelgröße des stückigen Materials, das im Schritt (i) verwendet wird, so ist, daß das gebackene Gebäckstück Partikel des stückigen Materials enthält, von dem ein erheblicher Anteil einen Durchmesser von nicht weniger als 1 mm aufweist, und die Abmessungen und Konfigurationen des Teigstücks und der Durchbrechung oder Durchbrechungen, gebildet im Schritt (ii), derart ist, daß bei dem gebackenen Gebäckstück die Fläche der Durchbrechung oder die Gesamtfläche der Durchbrechungen mindestens 10% der Fläche des Gebäckstücks (einschließlich der Fläche der Durchbrechung oder Durchbrechungen) ausmacht, und die Größe, Konfiguration und Position der Durchbrechungen derart ist, daß Zonen nahe der Peripherie einer Oberfläche des Gebäckstücks oder nahe dem Rand der oder jeder Durchbrechung und definiert durch eine gedachte Linie, gezogen innerhalb bzw. im Abstand von 7 mm von der Peripherie, und einer gedachten Linie, gezogen rings um den Rand der oder jeder Durchbrechung im Abstand von 7 mm, in einem solchen Ausmaß überlappen, daß die Gesamtüberlappungsfläche von verschiedenen Zonen, ausgenommen irgendwelcher verbundener Überlappungsfläche, mit einer Fläche, die kleiner ist als 10 mm², welche keinen Teil einer verbundenen Fläche von 10 mm² oder mehr bildet, nicht kleiner ist als 15% der Gesamtfläche des Gebäckstücks (einschließlich der Fläche der Durchbrechung oder Durchbrechungen).

13. Verfahren nach Anspruch 12, bei dem das stückige Material ein Getreideprodukt ist, hergestellt aus Weizen, Mais, Roggen oder Hafer.

## Revendications

1. Biscuit fabriqué par cuisson de pâte à biscuit brisée, ce biscuit contenant une matière particulaire comestible dans la proportion de 7% au moins du poids total du biscuit, cette matière particulaire ayant été incorporée dans la pâte avant la cuisson, une proportion au moins substantielle de la matière particulaire présentant un diamètre de particules supérieur ou égal à 1 mm, le diamètre du biscuit étant au moins de 40 mm, et la forme du biscuit présentant au moins une ouverture, la surface de cette ouverture, ou la surface totale des ouvertures, constituant au moins 10% de la surface du biscuit (surface de l'ouverture, ou des ouvertures, comprise), et la taille, forme et position des ouvertures étant telles que les zones adjacentes à la périphérie d'une surface du biscuit ou adjacentes au bord de l'ouverture, ou de chaque ouverture, et délimitées par une ligne imaginaire tracée, respectivement, à l'intérieur de la périphérie et à 7 mm de celle-ci, ou une ligne imaginaire tracée autour du bord de l'ouverture, ou de chaque ouverture, et à 7 mm de celui-ci, se recouvrent de telle façon que la surface totale de recouvrement des différentes zones, à l'exclusion de toute aire de recouvrement connexe de surface inférieure à 10 mm² ne faisant pas partie d'une aire connexe de 10 mm² ou plus, ne soit pas inférieure à 15% de la surface totale du biscuit (surface de l'ouverture, ou des ouvertures, comprise).

2. Biscuit selon la revendication 1, où la surface de l'ouverture, ou la surface totale des ouvertures, constitue de 13% à 30% de la surface du biscuit.

3. Biscuit selon la revendication 1 ou la revendication 2, où la surface totale de recouvrement des différentes zones, à l'exclusion de toute aire de recouvrement connexe de surface inférieure à 10 mm² ne faisant pas partie d'une aire connexe de 10 mm² ou plus, n'est pas supérieure à 50% de la surface totale du biscuit (surface de l'ouverture, ou des ouvertures, comprise).

4. Biscuit selon l'une quelconque des revendications 1 à 3, où la surface totale de recouvrement des différentes zones, à l'exclusion de toute aire de recouvrement connexe de surface inférieure à 10 mm² ne faisant pas partie d'une aire connexe de 10 mm² ou plus, est comprise entre 16% et 37% de la surface totale du biscuit (surface de l'ouverture, ou des ouvertures, comprise).

5. Biscuit selon l'une quelconque des revendications 1 à 4, où le biscuit est pratiquement circulaire, et la position de l'ouverture, ou des ouvertures, est telle qu'il existe au moins une ligne droite contenue dans le plan du biscuit et ayant sur un de ses côtés entre un tiers et la moitié de la surface du biscuit, 95% au moins de la surface ouverte du biscuit s'étendant d'un côté de ladite ligne droite.

6. Biscuit selon la revendication 5, où l'aire ouverte se trouve entièrement d'un côté de ladite ligne droite.

7. Biscuit selon l'une quelconque des revendications 1 à 6, où la matière particulaire est faite d'une céréale.

8. Biscuit selon la revendication 7, où la matière particulaire contient une céréale feuilletée ou égrugée.

9. Biscuit selon la revendication 7, où la matière particulaire contient des flocons de maïs.

10. Biscuit selon la revendication 8, où la matière particulaire est faite de flocons de maïs et d'avoine.

11. Biscuit selon l'une quelconque des revendications 1 à 10, ayant un diamètre d'au moins 50 mm.

12. Procédé de fabrication de biscuit, comportant les étapes suivantes:
(i)
mélanger 100 parties en poids de farine à biscuit,
de 20 à 75 parties en poids de sucre,
de 15 à 70 parties en poids de matière grasse,
de 0 à 30 parties en poids d'eau, et
de 10 à 25 parties en poids d'une matière particulaire pour faire le mélange de la pâte,
(ii) donner au mélange de la pâte la forme d'un morceau de pâte possédant au moins une ouverture, et
(iii) mettre au four le morceau de pâte,
la taille des particules de la matière particulaire utilisée à l'étape (i) étant telle que le biscuit cuit contient des particules de matière particulaire dont une proportion substantielle ont un diamètre supérieur ou égal à 1 mm, et les dimensions et formes du morceau de pâte et de l'ouverture, ou des ouvertures, données à l'étape (ii) étant telles que, dans le biscuit cuit, la surface de cette ouverture, ou la surface totale des ouvertures, constitue au moins 10% de la surface du biscuit (surface de l'ouverture, ou des ouvertures, comprise), et la taille, forme et position des ouvertures sont telles que les zones adjacentes à la périphérie d'une surface du biscuit ou adjacentes au bord de l'ouverture, ou de chaque ouverture, et délimitées par une ligne imaginaire tracée, respectivement, à l'intérieur de la périphérie et à 7 mm de celle-ci, ou une ligne imaginaire tracée autour du bord de l'ouverture, ou de chaque ouverture, et à 7 mm de celui-ci, se recouvrent de telle façon que la surface totale de recouvrement des différentes zones, à l'exclusion de toute aire de recouvrement connexe de surface inférieure à 10 mm² ne faisant pas partie d'une aire connexe de 10 mm² ou plus, ne soit pas inférieure à 15% de la surface totale du biscuit (surface de l'ouverture, ou des ouvertures, comprise).

13. Procédé selon la revendication 12, où la matière particulaire est un produit céréalier à base de blé, de maïs, de seigle ou d'avoine.
